# EUROPEAN PATENT APPLICATION

(11) **EP 4 191 195 A1**
(43) Date of publication of application: **07.06.2023**
(21) Application number: 22211073.6
(22) Date of filing: 02.12.2022
(51) Int. Cl.: G01B 3/11

(54) **DRAW-WIRE POSITION SENSOR**

(30) Priority: 03.12.2021 IT 202100030668
(71) Applicant: Spring S.r.l., 28040 Dormelletto (NO) (IT)
(72) Inventor: Sacconaghi, Fabio Renato, 21013 Gallarate VA (IT)
(74) Representative: Rondano, Davide

(57) **Abstract**

A draw-wire position sensor (10) is disclosed, which comprises: a body (12) having a flat face (22a) co0nfigured to be arranged facing a support surface of a first mechanical component (B1) on which the sensor (10) is intended to be mounted; a pulley (24) received within the body (12) in a rotatable manner about an axis of rotation (z); a wire (14) wound on the pulley (24) and protruding from a front area (32) of the body (12) to be attached, at a free end thereof, to a second mechanical component (B2) linearly movable with respect to the first one; elastic means (26) arranged to exert an elastic biasing action on the pulley (24) so as to keep the wire (14) constantly in tension; angular measuring means (38, 40, 42, 44, 46, 48) associated with the pulley (24) to detect magnitude and direction of rotation of the pulley (24) about its respective axis of rotation (z); and deflection means (34, 36) arranged between the pulley (24) and the front area (32) of the body (12) and configured to deflect the path of the wire (14) with respect to a direction tangent to the pulley (24), moving the wire (14) both towards the flat face (22a) of the body (12) and towards a centerline plane (P) of the body (12) passing through the axis of rotation (z) of the pulley (24).

## Description

### Technical field of the invention

The present invention relates to a draw-wire position sensor designed in particular, though not exclusively, to measure the extension of stabilizers and/or arms of lifting machines, industrial loaders and aerial platforms.

### State of the art

It is known the use of stabilizers, for example in lifting machines, industrial loaders and aerial platforms, in order to provide wider ground support and thus counteract the tilting moments acting on the machine during its operation. The machine is generally equipped with two stabilizers or four stabilizers, i.e. two front stabilizers and two rear stabilizers, but in some cases six stabilizers may also be provided.

Each stabilizer includes a respective arm which is extendable in the transverse direction. The extension or retraction movement of each extendable arm in the transverse direction is controlled either automatically by a control unit of the machine or manually by the operator by means of manual hydraulic control members, so as to widen or narrow the support base of the machine depending on the conditions of the area in which the machine is located.

In order for the control unit to calculate the tilting moment of the machine, it is necessary to measure the extension of the support feet of the stabilizers relative to the centre of the machine and/or the length of the arms of the machine, and position sensors are used to this end.

Such position sensors are typically made as draw-wire sensors, comprising - in a per-se-known manner - a sensor body, intended to be mounted on the fixed part of the arm of the stabilizer, i.e., on the part of the arm integral with the machine, a wire (or, more generally, an elongated flexible member, which as an alternative to a wire may be formed by a ribbon) that is wound on a pulley, which is rotatably received within the sensor body for rotation about an axis of rotation, and is attached at its free end to the movable part of the arm of the stabilizer, elastic means arranged to exert an elastic biasing action on the pulley so as to keep the wire constantly in tension, angular measuring means (such as encoders) associated with the pulley to detect magnitude and direction of the rotation of the pulley about said axis of rotation. In the case of extension or retraction movement of the arm of the stabilizer, the wire is unwound from the pulley or wound around the pulley, respectively, and thus the pulley rotates in one direction or the other to an extent proportional to the linear displacement of the movable part of the arm. Based on the measurement signals provided by the angular measuring means, it is possible to determine in what direction and by how much the movable part of the arm has moved. On large machines, the displacement to be detected by the draw-wire position sensors mounted on the stabilizers can reach values on the order of several meters.

The part of the wire that protrudes from the sensor body is naturally exposed to dirt and external agents, particularly water. Dirt (e.g., mud and dust) and water that are deposited on the exposed part of the wire can therefore enter inside the sensor body, when that part of the wire is rewound on the pulley as a result of the retraction of the stabilizers, which may lead to malfunction of the sensor. To limit the entry of dirt and water inside the sensor body, a rubber gasket is typically provided at the hole in the body through which the wire passes. However, such a gasket alone cannot completely prevent the introduction of dirt and water, dragged by the wire, inside the sensor body.

A draw-wire position sensor of the type identified above is known, in which the sensor body basically comprises three separate portions, removably connected to each other by means of screws, namely, an inner body portion, which in the mounted condition of the sensor on the arm of the stabilizer is intended to be in contact with a flat support surface of the fixed part of the arm, an outer body portion, facing the opposite side with respect to the inner body portion, and an intermediate body portion, interposed between the inner body portion and the outer body portion. The intermediate body portion accommodates the pulley on which the wire is wound, the inner body portion accommodates the elastic means, such as a flat coil spring, associated with the pulley, while the outer body portion accommodates the sensor electronics. Such a sensor configuration does not allow easy access to the pulley in order, for example, to clean the wire wound on it. Furthermore, the hole through which the wire exits the sensor body is arranged at a distance from a plane of symmetry of the sensor body, which plane is oriented, in the mounted condition of the sensor on the arm of the stabilizer, parallel to the direction of the extension and retraction movement of the arm. Accordingly, a symmetrical mounting of the sensor on stabilizers located on both sides of the machine is not possible. The same drawbacks are also found in case of other applications of the sensor, for example, in case the sensor is used to detect the extension of a boom of an aerial platform.

### Summary of the invention

It is an object of the present invention to provide a draw-wire position sensor which is not affected by the drawbacks of the prior art discussed above.

This and other objects are fully achieved according to the present invention by a draw-wire position sensor as defined in the attached independent claim 1.

Further advantageous aspects of the draw-wire position sensor according to the invention are defined in the dependent claims, the subject-matter of which is intended to form an integral part of the present description.

In summary, the invention is based on the idea of providing, between the pulley and the front area of the body from which the wire exits, deflection means configured to deflect the path of the wire with respect to a direction tangent to the pulley, by moving the wire both towards a lower face of the body and towards a centerline plane of the body passing through the axis of rotation of the pulley. In this way, the wire exiting the sensor body will be as close as possible to the surface of the mechanical component on which the sensor is mounted, thereby reducing the risk of mechanical interference with the wire. Preferably, the deflection means are configured such that the wire exiting the sensor body extends along a direction substantially lying in the centerline plane of the body. In this way, the direction of the wire exiting the sensor body will always be in the same position relative to the mechanical component on which the sensor is mounted, regardless of whether the sensor is mounted with wire exit on the left or with wire exit on the right. Therefore, it is possible to use the same sensor both in the case of mounting of the right and in the case of mounting on the left with respect to the stabilizer (or, more generally, with respect to the mechanical component on which the sensor is mounted), without the need to provide two different versions of the sensor each intended for a respective mounting position.

### Brief description of the drawings

Further features and advantages of the present invention will result more clearly from the following description, given purely by way of non-limiting example with reference to the accompanying drawings, in which:
- Figure 1 is a rear perspective view of a draw-wire position sensor according to an embodiment of the present invention;
- Figure 2 is a front perspective view of the sensor of Figure 1, from which the top (outer) cover of the sensor body has been removed;
- Figures 3 and 4 are a perspective view and a front view, respectively, showing the sensor of Figure 1 mounted on a stabilizer of a lifting machine;
- Figure 5 is a perspective view of the sensor of Figure 1, in which the upper (outer) portion of the sensor is shown in exploded view;
- Figure 6 is a perspective view of the sensor of Figure 1, in which the sensor is upside down with respect to the position of Figure 1 and in which the lower (inner) portion of the sensor is shown in exploded view; and
- Figures 7 and 8 show two examples of mounting of the sensor of Figure 1, with left wire exit and right wire exit, respectively.

### Detailed description

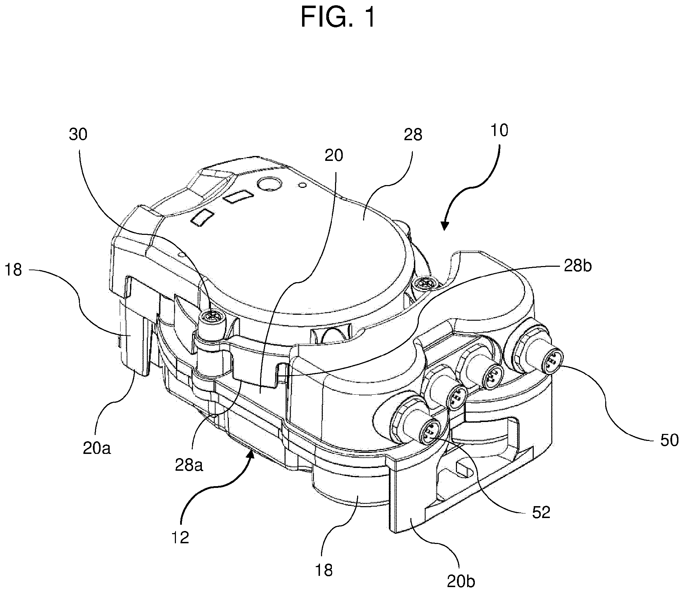

Referring first to Figures 1 to 6, a draw-wire position sensor (hereinafter simply referred to as "sensor") according to an embodiment of the present invention is generally indicated 10.

The sensor 10 is intended in particular for use on extendable arms, for example arms of stabilizers, of lifting machines, industrial loaders or aerial platforms (hereinafter, for convenience, simply referred to as "machines") to measure the linear position of these arms along their respective extension/retraction directions.

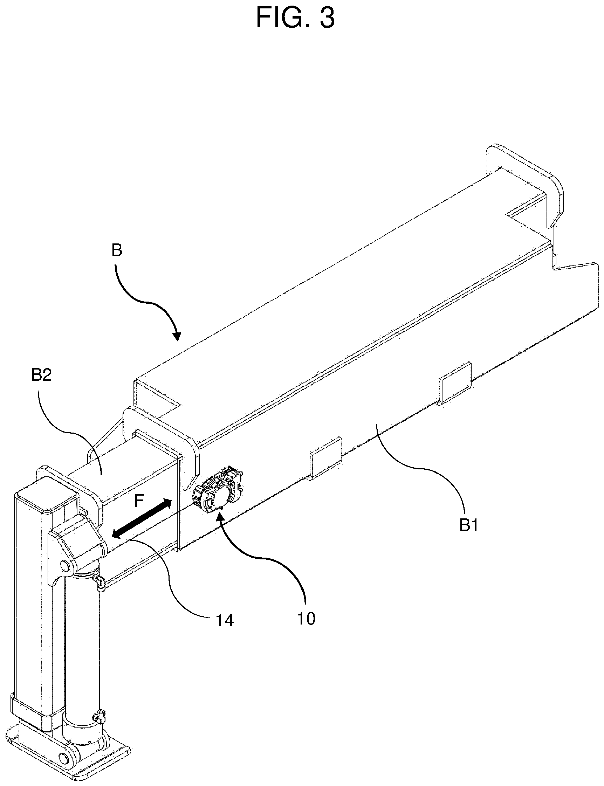

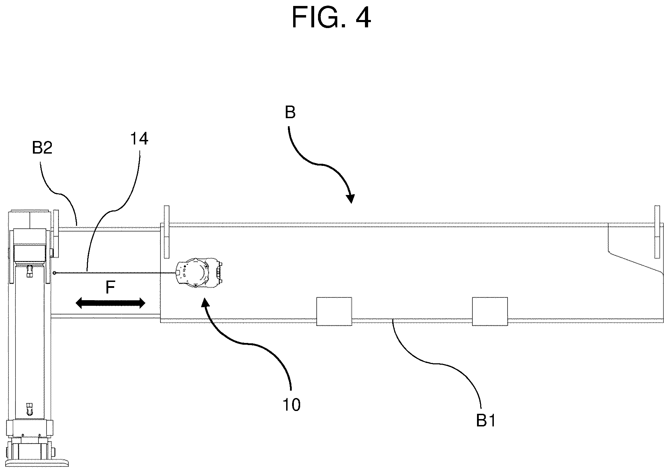

In this regard, Figures 3 and 4 show an example of mounting of the sensor 10 on an arm B of a stabilizer, which arm B comprises a first part B1, or fixed part, which is fixed relative to the body of the machine, and a second part B2, or movable part, which is movable relative to the first part B1, and thus relative to the body of the machine, along an extension/retraction direction indicated by double arrow F.

Although in the following description reference will be made specifically to the application of the sensor on a stabilizer, it is to be understood, however, that the invention is in no way limited to this application, but can be used in many other fields to measure the position of a first mechanical component that is linearly movable with respect to a second mechanical component.

The sensor 10 first includes a body 12, intended to be mounted, for example, on the fixed part B1 of the arm B of the stabilizer, i.e., on the part of the arm which is integral with the machine, and a wire 14 protruding from the body 12 and provided at its free end with an end member 16, intended to be attached, for example, to the movable part B2 of the arm B of the stabilizer. As far as the wire is concerned, it is shown in the drawings as having a circular cross-section, but it might also have a different cross-section, in particular a rectangular cross-section. The term "wire" should therefore be understood, for the purposes of the present invention, to mean any elongated flexible member, including for example a ribbon.

In the mounting example shown in Figures 3 and 4, the sensor 10 is mounted on a lateral, substantially vertical, surface of the fixed part B1 of the arm B of the stabilizer, but it might also be mounted in another position, for example on an upper, substantially horizontal, surface of the part fixed B1.

The body 12 basically comprises a first body part 18, which in the mounted condition faces the mechanical component (for example the fixed part B1 of the arm B of a stabilizer) on which the body 12 is mounted, and a second body part 20, which in the mounted condition is arranged on the opposite side with respect to that mechanical component.

The first body part 18 has a flat face 22a, formed in particular by a removable cover 22, which in the mounted condition faces the support surface of the mechanical component on which the body 12 is mounted. Preferably, as in the embodiment proposed herein, the body 12 is fixed on the support surface of the mechanical component with a pair of legs 20a and 20b, that is to say, a front leg and a rear leg, respectively, which may be formed by the second body part 20, as in the illustrated example, or alternatively by the first body part 18. In the case where the legs 20a and 20b are provided, the flat face 22a will be at a distance, on the order of a few millimetres, from the support surface of the mechanical component.

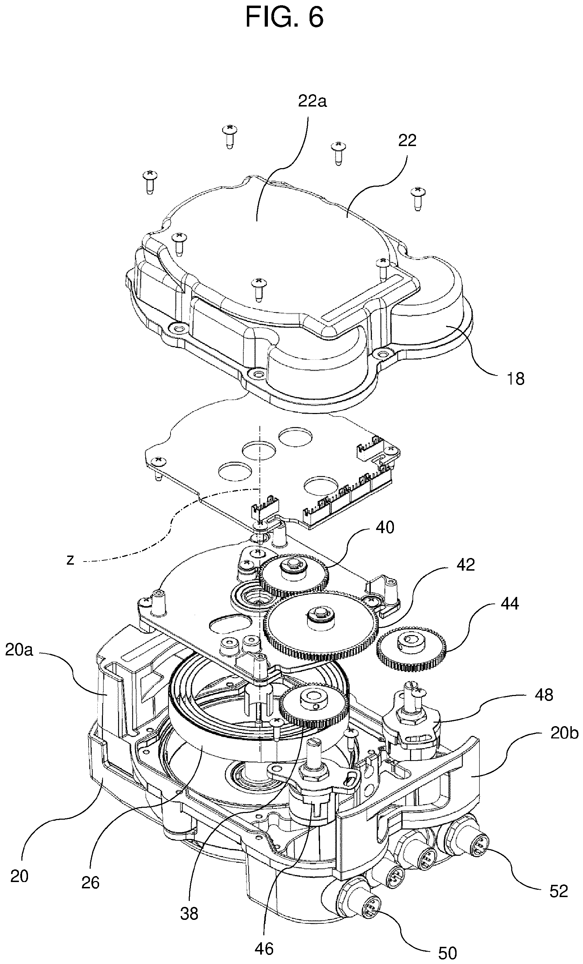

Inside the body 12, in particular inside the second body part 20, a pulley 24 is accommodated on which the wire 14 is wound. The pulley 24 is rotatably mounted about an axis of rotation z, in particular an axis oriented perpendicular to the flat face 22a. Associated with the pulley 24 is a spring 26, which is made in particular as a flat coil spring and is also accommodated within the upper body part 18, as shown in Figure 6. The spring 26 is arranged to exert on the pulley 24 an elastic biasing torque directed in the direction of winding of the wire 14 on the pulley 24, and thus tending to keep the wire 14 constantly in tension.

The compartment of the second body part 20 in which the pulley 24 is accommodated is closed at the top by a cover 28. The cover 28 is advantageously removably attached, for example by means of screws 30 (preferably captive-type screws, so as to remain anchored to the cover 28 when the latter is removed), to the second body part 20, so as to allow easy access of the operator to the pulley 24 for performing maintenance and/or cleaning operations.

Preferably, the cover 28 is configured so as not to seal the compartment of the second body part 20 in which the pulley 24 is accommodated, but to define with this body part one or more passages through which water and/or dirt that may have penetrated inside the pulley compartment, for example transported together with the wire 14, is allowed to pour out. This makes it possible to avoid, or at least significantly limit, the risk of blockage of the pulley 24 due to dirt accumulated inside the relating compartment in the second body part 20 if proper cleaning of this compartment by the operator is not carried out periodically. The above-mentioned passages may, for example, be obtained by the fact that in the mounted condition (see Figure 1) the cover 28 does not rest at its bottom on the second body part 20, but remains with a lower edge 28a thereof at a distance from that body part, and/or by the fact that the cover 28 has one or more recesses or openings 28b.

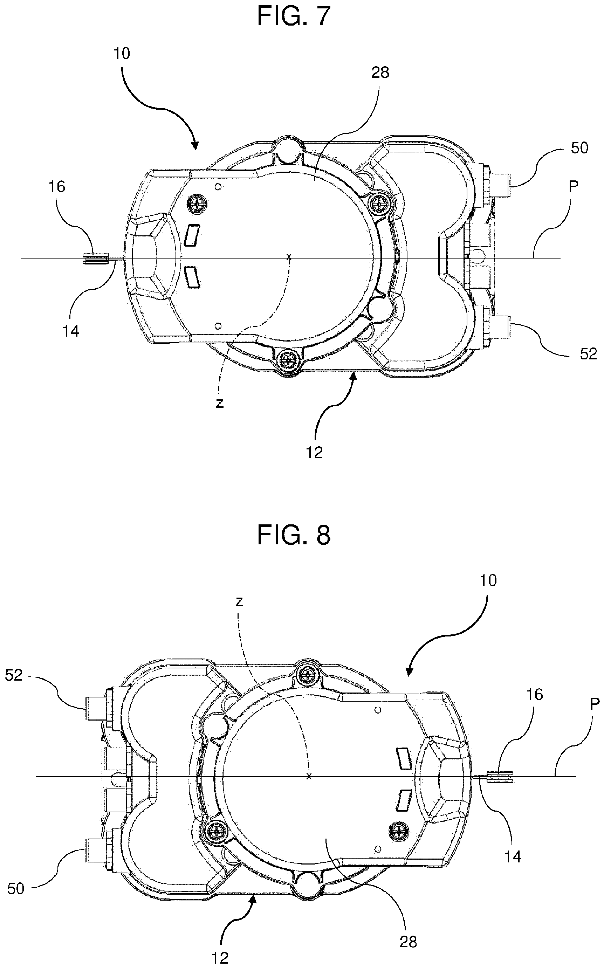

As can be observed particularly in Figures 7 and 8, body 12 has a substantially symmetrical structure with respect to a centerline plane P extending vertically, that is, perpendicular to the flat face 22a of body 12. The axis of rotation x of pulley 24 lies substantially on this centerline plane P.

According to an aspect of the present invention, deflection means are interposed between the pulley 24 and a front area 32 of the body 12, i.e., the area from which the wire 14 exits the body 12, which deflection means are configured to deflect the path of the wire 14 relative to the tangent to the pulley 24, in particular by shifting the path of the wire 14 both towards the flat face 22a of the body 12 and towards the centerline plane P.

The direction (indicated x) along which the wire 14 extends outside the body 12 is therefore arranged below the pulley 14, in particular at the same height as the spring 26. This allows the wire 14 to be brought closer to the mechanical component (e.g., the arm of a stabilizer of a construction or earthmoving machine) on which the sensor 10 is mounted, and thus to reduce the risk of mechanical interference with the wire 14.

Furthermore, the direction x along which the wire 14 extends out of the body 12 lies in this way in the centerline plane P, and therefore passes through the axis of rotation z of the pulley 24. Consequently, as shown in Figures 7 and 8, regardless of whether the sensor 10 is mounted with the wire 14 exiting on the left (Figure 7) or with the wire 14 exiting on the right (Figure 8), the direction x of the wire 14 will always lie in the same position relative to the mechanical component on which the sensor 10 is mounted. In the case, for example, of use of the sensor 10 on the stabilizer of a construction or earthmoving machine, the wires of the sensors mounted on the front stabilizers, right and left, will be aligned with each other, and, likewise, the wires of the sensors mounted on the rear stabilizers, right and left, will also be aligned with each other. This can be achieved without the need to provide two different versions of the sensor, one for mounting with wire exit on the right and one for mounting with wire exit on the left, as it is instead necessary with the sensors of the prior art.

More generally, the direction x of the wire 14 outside the body 12 will be arranged at a distance from the centerline plane P of not more than 25 percent of the radius of the pulley 24, preferably not more than 10 percent of the radius of the pulley 24, so that the position of the wire with respect to the mechanical component on which the sensor 10 is mounted does not change substantially or, in any case, changes very little, irrespective of whether the sensor is mounted with the wire exit on the right or with the wire exit on the left.

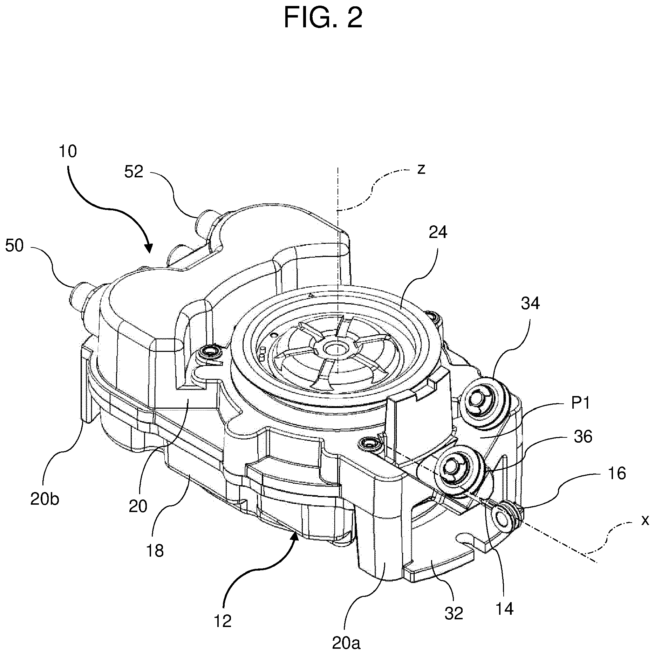

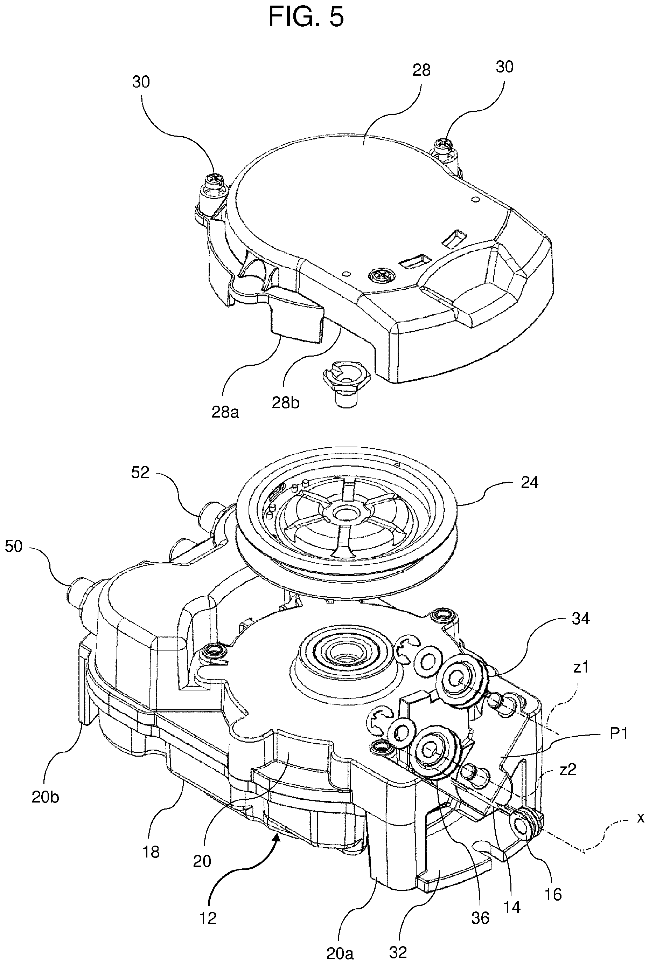

Preferably, as shown in Figures 2 and 5, the aforementioned deflection means comprise a pair of wheels 34 and 36 mounted in a freely rotatable manner on the body 12. More specifically, according to the embodiment proposed herein, the wheels 34 and 36 are mounted on a plane P1 of the body 12 arranged inclined at a certain angle, e.g. 45 degrees, to the centerline plane P, with the wheel 34 positioned higher than the wheel 36. The axes of rotation of the wheels 34 and 36, indicated z1 and z2, respectively, are directed perpendicular to the inclined plane P1. Therefore, the wheel 34 causes a first deflection of the wire 14 unwinding from the pulley 24 from a direction tangential to the pulley 24 to a direction directed downwards and towards the centerline plane P, while the wheel 36 causes a second deflection of the wire 14 coming from the wheel 34 such that the wire 14 exiting the wheel 36 is directed along the aforementioned direction x.

In addition to bringing the direction x of the wire 14 closer to the mechanical component on which the sensor 10 is mounted and closer to the centerline plane P, preferably right on that plane, the use of the two wheels 34 and 36 as deflection means also makes it easier for dirt and/or water to detach from the wire 14 and thus reduce the risk that such external agents will enter the body 12.

Finally, the sensor 10 includes angular measuring means associated with the pulley 24 to detect in an absolute manner the rotation of the pulley 24 about the axis of rotation z. With reference to Figure 5, according to the embodiment proposed herein, these angular measuring means include, accommodated in the first body part 18, a measuring wheel 38, made as a toothed wheel, a pinion gear 40, drivingly connected for rotation with the pulley 24, and a transmission mechanism for transferring motion from the pinion gear 40 to the measuring wheel 38, as a result of the rotation of the pulley 24.

Such a transmission mechanism includes, for example, an intermediate gearwheel 42 meshing on one side with the measuring wheel 38 and on the other side with the pinion gear 40.

Optionally, as in the illustrated solution, the sensor 10 includes an additional measuring wheel, denoted 44, which is also driven by the transmission mechanism. In the example shown herein, where the transmission mechanism includes the intermediate gear wheel 42, the measuring wheel 44 also meshes with the intermediate gear wheel 42. In this way, the rotation of the pinion gear 40 due to the rotation of the pulley 24 about the axis of rotation z causes both the measuring wheel 38 and the measuring wheel 44 to rotate in opposite directions to each other. The measuring wheels 38 and 44 are associated with respective angular position sensors 46 and 48, formed for example by encoders or potentiometers, each of which is arranged to detect the angle and direction of rotation of the respective measuring wheel. The use of a second measuring wheel with its respective angular position sensor obviously offers measurement redundancy, which is useful, for example, in the event of a malfunction of one of the two sensors.

Although in the embodiment illustrated herein gear wheels are provided to transmit the rotary motion from the pulley 24 to the measuring wheel 38 (as well as to the measuring wheel 44, where present), other solutions for the motion transmission, such as toothed belt or chain mechanisms, may be provided.

The angular position sensors 46 and 48 are connected to an internal electronic board that may be of either analog or digital type.

In the case of an analog type electronic board, it outputs on a pair of connectors 50 and 52 an amplified signal from 4 to 20 mA which is proportional to the actual magnitude of the extension of the wire 14 out of the body 12. The 4-mA output makes it possible to highlight any electrical failure of the sensor 10 or any break in the wire 14, since in this case the output would change from 4 mA to 0, and the electronic control unit reading these analog signals would notice the anomaly and activate in alarm mode accordingly. In the case of a digital type electronic board, it includes a dual microprocessor that calculates through a firmware the actual magnitude of the extension of the wire 14 out of the body 12. This model can be provided with a single or dual CAN BUS, 485 or 4-20 mA, output. In the event of an anomaly with the sensor 10, this anomaly would be processed by the firmware directly inside the sensor and communicated via the bus to the control unit of the machine, which would consequently activate in alarm mode.

The present invention has been described so far with reference to preferred embodiments thereof. It is to be understood that other embodiments may be envisaged, which share the same inventive core with the one described herein and also fall within the scope of protection defined by the appended claims.

For example, the fact that the cover is configured not to seal the compartment of the second body part in which the pulley is accommodated, but to define with that body part one or more passages through which any water and/or dirt that may have entered the pulley compartment is allowed to pour out, may be provided regardless of whether the sensor includes deflection means arranged between the pulley and the front area of the body and configured to deflect the path of the wire with respect to a direction tangent to the pulley, moving the wire both towards the flat face of the body and towards the centerline plane of the body passing through the axis of rotation of the pulley.

Therefore, the present invention also includes a draw-wire position sensor for measuring the position of a first linearly movable mechanical component with respect to a second mechanical component, wherein the sensor comprises:
- a body configured to be mounted on the first mechanical component, the body having a flat face configured to be arranged facing a support surface of the first mechanical component,
- a pulley accommodated in a compartment within a part of the sensor body opposite that flat face, the pulley being rotatable about an axis of rotation oriented perpendicular to that flat face,
- a wire wound on the pulley and protruding from a front area of the body to be attached, at a free end thereof, to the second mechanical component,
- elastic means arranged to exert an elastic biasing action on the pulley so as to keep the wire constantly in tension, in such a way that as a result of the linear movement of the first mechanical component in one direction or the other with respect to the second mechanical component, the wire is unwound from the pulley or rewound on the pulley, respectively,
- angular measurement means associated with the pulley to detect magnitude and direction of rotation of the pulley about its respective axis of rotation, and
- a cover which is removably attached to the body part forming the compartment in which the pulley is accommodated and is configured so as not to seal this compartment, but to define with the body part forming this compartment one or more passages through which any water and/or dirt is allowed to exit this compartment.

## Claims

1. Draw-wire position sensor (10) for measuring the relative linear position of a first mechanical component (B1) with respect to a second mechanical component (B2), the sensor (10) comprising:
- a body (12) configured to be mounted on said first mechanical component (B1), the body (12) having a flat face (22a) configured to be arranged facing a support surface of said first mechanical component (B1),
- a pulley (24) received inside the body (12) in a rotating manner about an axis of rotation (z) oriented perpendicular to said flat face (22a),
- a wire (14) wound on the pulley (24) and protruding from a front area (32) of the body (12) to be attached, at a free end thereof, to said second mechanical component (B2),
- elastic means (26) arranged to exert an elastic biasing action on the pulley (24) so as to keep the wire (14) constantly in tension, whereby as a result of the linear movement of said second mechanical component (B2) in one direction or the other with respect to said first mechanical component (B1) the wire (14) is unwound from the pulley (24) or rewound on the pulley (24), respectively, and
- angular measuring means (38, 40, 42, 44, 46, 48) associated with the pulley (24) to detect magnitude and direction of rotation of the pulley (24) about said axis of rotation (z);
**characterized in that** it further comprises deflection means (34, 36) arranged between the pulley (24) and said front area (32) of the body (12) and configured to deflect the path of the wire (14) with respect to a direction tangent to the pulley (24), moving the wire (14) both towards said flat face (22a) and towards a centerline plane (P) of the body (12) passing through the axis of rotation (z) of the pulley (24).

2. Sensor according to claim 1, wherein said deflection means (34, 36) are configured such that the wire (14) extends outside the body (12) along a direction (x) located at a distance from said centerline plane (P) of not more than 25%, preferably not more than 10%, of the radius of the pulley (24).

3. Sensor according to claim 2, wherein said deflection means (34, 36) are configured such that said direction (x) of the wire (14) lies on said centerline plane (P).

4. Sensor according to any one of the preceding claims, wherein said deflection means (34, 36) comprise a pair of wheels (34, 36) mounted in a freely rotatable manner on the body (12) about respective axes of rotation (z1, z2) inclined with respect to said centerline plane (P), said wheels (34, 36) being arranged so as to act on the wire (14) one after the other.

5. Sensor according to any one of the preceding claims, wherein the pulley (24) is received in a compartment within a body part (20) of the body (12) opposite said flat face (22a), said compartment being closed by means of a cover (28) which is removably attached to said body part (20).

6. Sensor according to claim 5, wherein said cover (28) is configured not to seal the compartment in which the pulley (24) is received, but to define one or more passages through which any water and/or dirt is allowed to pour out of said compartment.

7. Sensor according to any one of the preceding claims, wherein said angular measuring means (38, 40, 42, 44, 46, 48) comprise a first measuring wheel (38), a main wheel (40) drivingly connected for rotation with the pulley (24) about said axis of rotation (z), a transmission mechanism (42) for transmitting rotary motion from said main wheel (40) to said first measuring wheel (38), and a first angular position sensor (46) arranged to detect direction and magnitude of rotation of said first measuring wheel (38).

8. Sensor according to claim 7, wherein said main wheel (40) and said first measuring wheel (38) are made as gear wheels, and wherein said transmission mechanism (42) comprises an intermediate gear wheel meshing with both said main wheel (40) and said first measuring wheel (38).

9. Sensor according to claim 8, wherein said angular measuring means (38, 40, 42, 44, 46, 48) further comprise a second measuring wheel (44), which is made as a gear wheel and meshes with said intermediate gear wheel, and a second angular position sensor (48) arranged to detect direction and magnitude of rotation of said second measuring wheel (44).

10. Mechanical member comprising a first mechanical component (B1), a second mechanical component (B2) linearly movable with respect to said first mechanical component (B1), and a draw-wire position sensor (10) according to any one of the preceding claims for measuring the position of said second mechanical component (B2) with respect to said first mechanical component (B1), wherein the body (12) of the sensor (10) is mounted on said first mechanical component (B1) with said flat face (22a) facing a support surface of said first mechanical component (B1), and wherein the free end of the wire (14) of the sensor (10) is attached to said second mechanical component (B2).

11. Mechanical member according to claim 10, wherein said first mechanical component (B1) is a fixed part of an arm (B) of a stabilizer of a machine, such as a lifting machine, an industrial loader or an aerial platform, and wherein said second mechanical component (B2) is a movable part of said arm (B).

12. Machine, such as a lifting machine, an industrial loader or an aerial platform, comprising a mechanical member according to claim 11.
